# FASCICULE DE BREVET EUROPEEN

(11) **EP 3 216 032 B1**
(45) Date de publication et mention de la délivrance du brevet: **26.09.2018**
(21) Numéro de dépôt: 15805570.7
(22) Date de dépôt: 02.11.2015
(51) Int. Cl.: H01F 5/02, H01F 27/40, H01F 27/32

(54) **ELEMENTS BOBINES COMPORTANT UN DISPOSITIF DE MESURE DE TEMPERATURE**
GEWICKELTE ELEMENTE MIT EINER TEMPERATURMESSVORRICHTUNG
COILED ELEMENTS COMPRISING A TEMPERATURE MEASURING DEVICE

(30) Priorité: 05.11.2014 FR 1460673
(43) Date de publication de la demande: 13.09.2017
(73) Titulaire: Safran Electrical & Power, 31702 Blagnac Cedex (FR)
(72) Inventeur: DELALANDRE, Nicolas, 92120 Montrouge (FR); SALAT, Jacques, 77170 Brie Comte Robert (FR)
(74) Mandataire: David, Alain
(86) Numéro de dépôt international: PCT/FR2015/052945
(87) Numéro de publication internationale: WO 2016/071614

(56) Documents cités:
- EP-A1- 0 342 468
- EP-A1- 1 441 374
- WO-A2-99/00004
- DE-A1-102012 010 848
- JP-A- H06 290 967

## Description

### Arrière-plan de l'invention

La présente invention se rapporte de façon générale à la mesure de température dans les turbomachines et elle s'intéresse plus particulièrement à la mesure de température dans des éléments bobinés tels que les transformateurs ou les inductances disposés dans un boitier en environnement moteur (carter de soufflante de turbomachine aéronautique) et dont la température de boitier ne doit pas dépasser 204°C, température généralement retenue comme étant la température d'autoinflammation des vapeurs carburant, en cas de simple panne (par exemple du fait d'un court-circuit électrique).

Un enroulement d'élément bobiné est un ensemble extrêmement hétérogène fait de cuivre, de films isolants, de résines, d'air ... De plus, pour des raisons de fonctionnalité électrique, les enroulements sont formés de couches de spires extrêmement compactes. La mesure de température au sein d'un tel élément bobiné s'avère donc des plus délicats.

Deux méthodes de mesure peuvent à ce jour être distinguées. La première consiste, principalement dans les enroulements de machines tournantes, à introduire des sondes de températures directement dans le coeur des éléments bobinés. Cela nécessite de recourir à un procédé de bobinage assez compliqué afin de ne pas détériorer la sonde sans induire des selfs de fuites rédhibitoires pour atteindre de bonnes performances électriques, et le taux de pertes reste malgré tout encore assez important.

La seconde plus particulièrement mise en oeuvre dans les inductances et les transformateurs des réseaux électriques, lesquels éléments sont particulièrement sensibles aux selfs de fuite, consiste soit à coller des sondes de température sur les éléments bobinés après réalisation de ces derniers soit à encapsuler ces sondes dans des blocs de résines introduits entre les éléments bobinés. Toutefois, le collage implique une étape industrielle supplémentaire particulièrement délicate et l'encapsulation implique d'une part une mise en position de la sonde qui ne peut être faite de manière précise durant l'encapsulation et d'autre part, en raison de la faible conductivité thermique des résines, un temps de réponse de ces sondes de température alors très important pouvant entrainer une non détection de pannes.

Le document EP1 441 374 A1 divulgue un transformateur de haute tension ayant une sonde de température fixée sur le noyau pour mesurer la température d'une bobine enroulée dessus.

Le document JP H06 29067 A divulgue une bobine ayant une sonde de température placée à l'intérieur de l'enroulement, entre deux spires.

Le document DE 10 2012 010848 A1 divulgue une sonde de température pour bobine plate intégrée à une feuille recouvrant la bobine plate.

Le document WO 99/00004 A2 divulgue un appareil de mesure de la température pour une batterie ayant la forme d'une feuille diélectrique enroulée autour de la batterie.

Le document EP 0 342 468 A1 divulgue un élément bobiné enroulé conjointement avec un fil de fibre optique afin d'obtenir une mesure de la température de la bobine de manière distribuée.

Il existe donc à ce jour un besoin de trouver un moyen, simple d'un point de vue industriel, de récupérer rapidement l'information de température d'un bobinage sans en dégrader la performance électrique.

### Objet et résumé de l'invention

La présente invention pallie ces inconvénients en proposant un dispositif de mesure de température faisant partie intégrante de l'élément bobiné. Un but de l'invention est aussi de proposer un dispositif particulièrement adapté à la détection de pannes dans ces éléments bobinés.

Ces buts sont atteints par un élément bobiné formé d'une pluralité de couches superposées de spires bobinées sur un noyau, caractérisé en ce qu'il comporte une feuille d'un matériau thermiquement conducteur et paramagnétique dans le plan, intercalée entre deux de ladite pluralité de couches superposées de spires et dont une extrémité en saillie de ladite pluralité de couches comporte au moins une sonde de température pour délivrer une information de température relative audit élément bobiné.

Le recours à une feuille de forte conductivité thermique dans le plan permet une mesure de température simple d'un point de vue industriel et qui ne dégrade pas la performance électrique du bobinage. La réactivité et la robustesse du dispositif permet en outre la détection des pannes les plus rapides.

De préférence, ladite feuille de matériau thermiquement conducteur au moins dans le plan est constituée par un diffuseur thermique ayant une conductivité thermique dans le plan comprise entre 350 W/mK et 10000 W/mK et avantageusement à base de graphite ou composé d'un matériau orthotrope.

Selon l'application envisagée, cet élément bobiné peut former un bobinage d'une machine électrique, d'une inductance ou d'un transformateur et dans ce cas, ladite feuille de matériau thermiquement conducteur au moins dans le plan est en outre avantageusement constituée en un matériau électriquement isolant et peut se substituer à au moins un film isolant formant la capacité inter-bobinage dudit transformateur.

Avantageusement, ladite extrémité en saillie comporte une pluralité de sondes de température aptes à communiquer des informations de température à une unité commune de contrôle à laquelle elles sont reliées de façon filaire ou non.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique en écorché d'une inductance comportant un dispositif de mesure de température conforme à l'invention,
- la figure 2 est une vue en coupe d'un transformateur comportant un dispositif de mesure de température conforme à l'invention, et
- les figures 3A et 3B illustrent en perspective un exemple de transformateur comportant respectivement deux ou trois sondes de température.

### Description détaillée d'un mode de réalisation

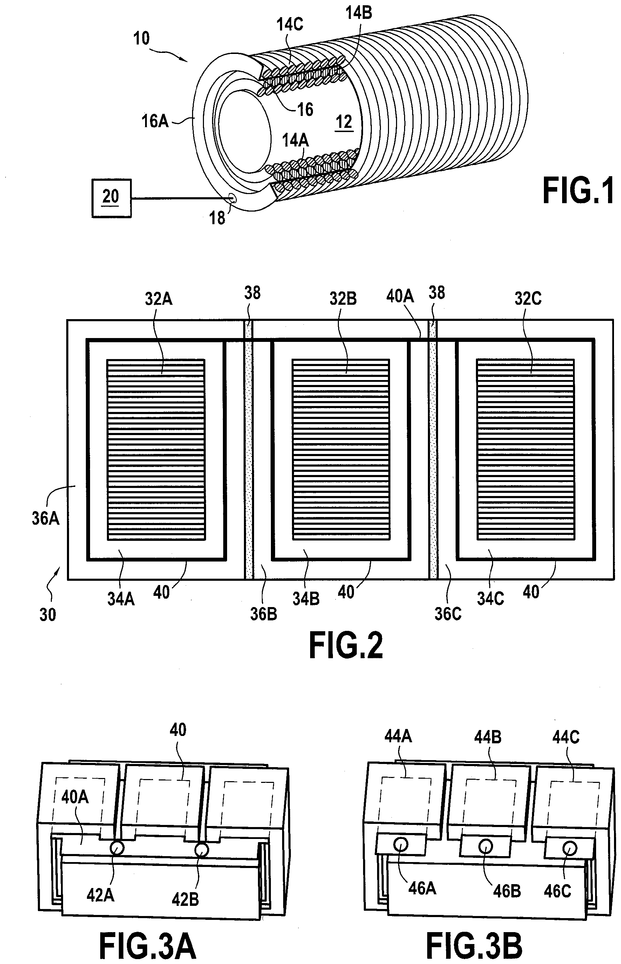

La figure 1 montre de façon schématique un écorché d'une inductance 10 comportant, comme il est connu, un noyau de fer doux 12 sur lequel est bobiné, dans l'exemple illustré, trois couches 14A, 14B, 14C de spires de cuivre superposées. Selon l'invention, une feuille 16 de faible épaisseur (suffisante pour assurer sa tenue mécanique) et a minima conductrice thermiquement dans le plan (pour assurer une homogénéité des températures) est intercalée entre deux des couches superposées et comporte une partie d'extrémité en saillie 16A dépassant des couches de spires et formant une collerette. Une sonde de température 18 est solidaire (par collage, vissage ou toute autre fixation équivalente) de cette collerette et apte à communiquer une information de température à une unité de contrôle 20 à laquelle elle est reliée de façon filaire ou non.

La figure 2 illustre la mise en oeuvre de l'invention dans un transformateur 30 triphasé conventionnel à bobinage dont le noyau feuilleté comporte trois jambes 32A, 32B, 32C autour desquelles sont enroulés concentriquement à la fois l'enroulement basse tension 34A, 34B, 34C et l'enroulement haute tension 36A, 36B, 36C. Une résine 38 sépare les enroulements haute tension entre eux et le film isolant qui sépare traditionnellement chacun des enroulements basse tension des enroulements haute tension est remplacé par une feuille 40 de faible épaisseur et a minima conductrice thermiquement dans le plan (des matériaux conducteurs thermiques isotropes sont également envisageables) comportant une partie d'extrémité en saillie 40A dépassant des enroulements et formant une collerette.

Dans le cas particulier d'un exemple d'autotransformateur, le bobinage est constitué d'un enroulement commun secondaire tertiaire encadré par deux demi-enroulements primaires. Ainsi, la feuille est introduite entre les enroulements secondaire-tertiaire et demi-primaires.

Comme précédemment, la collerette 40A, externe aux enroulements, est destinée à recevoir une sonde de température ou de préférence deux sondes de température 42A, 42B (voir la figure 3A) reliées à une unité commune de contrôle (non illustrée) pour permettre de détecter une panne quelle que soit la jambe de l'autotransformateur concernée, et cela avec un minimum de sondes.

S'agissant de détecter des pannes dans des éléments bobinés pour lesquels les niveaux de dissipation thermique sont élevés, le dispositif de mesure de température ainsi créé s'avère particulièrement adapté aux deux catégories de pannes connues, à savoir les pannes dites « lentes » pour lesquelles le temps de détection est supérieur à 4-5s mais aussi et surtout les pannes dites « rapides » pour lesquelles le temps de détection doit être inférieur à 4-5s et pour lesquelles à ce jour une mesure de température (détection par voie thermique externe au moyen de sondes de température collées sur les bobinages) est trop lente pour être efficace entrainant alors une non détection du défaut.

On notera qu'il est aussi possible d'utiliser une feuille 44A, 44B, 44C par jambe du transformateur et donc trois sondes de température 46A, 46B, 46C fixées sur leurs collerettes respectives afin d'obtenir une mesure plus précise, comme illustré à la figure 3B. On notera également qu'il est encore possible, à l'image d'une inductance, d'utiliser une feuille par enroulement BT et/ou HT afin d'obtenir une mesure plus précise de chaque enroulement (mais alors avec six sondes de température), notamment en transitoire (cas de panne).

La forme (surface) et l'épaisseur de la feuille sont essentiellement définies par les contraintes thermiques imposées (conductivité thermique au moins dans le plan), par l'épaisseur maximale autorisée (notamment au regard de la tenue mécanique recherchée) et par le nombre de sondes à implanter, lui-même défini par la précision souhaitée pour les mesures, notamment en transitoire (temps de réponse minimale). Les modélisations thermiques ont notamment montré que la solution à trois sondes avait un temps de réaction deux fois plus rapide que la solution à deux sondes.

En outre, la nécessité d'avoir un matériau d'épaisseur faible et conducteur thermiquement au moins dans le plan (les matériaux conducteurs thermiques isotropes sont également envisageables) a conduit les inventeurs à opter pour des feuilles de type diffuseur thermique composé de matériaux orthotropes qui ont des conductivités thermiques dans le plan au moins égales à celle du cuivre (jusqu'à 1500 W/mK). Toutefois, un diffuseur thermique à base de graphite tel que spreadershield^{tm} de la société GrafTech International, conçu initialement pour la diffusion de chaleur dans les appareils électroniques (téléphones portables par exemple) et ayant une conductivité thermique de l'ordre de 500W/mK s'est ainsi avéré particulièrement adapté (de façon plus générale une conductivité comprise entre 350 W/mK et 10000 W/mK est acceptable).

La solution technique proposée par l'invention consistant à insérer au coeur du bobinage (voire entre deux couches de l'enroulement) une feuille d'un matériau thermiquement conducteur et de préférence isolant électriquement dont une extrémité sortant du bobinage permet en implantant une sonde de température sur cette extrémité extérieure de la feuille, de récupérer l'information de température relative au bobinage et de la communiquer à une unité de contrôle pour traitement. En outre, la faible épaisseur de cette feuille permet de ne pas induire de self de fuite.

On notera bien que si les dessins illustrent un transformateur ou autotransformateur triphasé, il est clair que l'invention est applicable à tout élément bobiné de machine électrique.

## Revendications

1. Elément bobiné (10 ;30) formé d'une pluralité de couches superposées de spires (14A, 14B, 14C) bobinées sur un noyau (12 ;32A, 32B, 32C), **caractérisé en ce qu'**il comporte une feuille (16 ; 40) d'un matériau thermiquement conducteur au moins dans le plan, intercalée entre deux de ladite pluralité de couches superposées de spires et dont une extrémité en saillie (16A ; 40A) de ladite pluralité de couches comporte au moins une sonde de température (18 ; 42A, 42B, 42C) pour délivrer une information de température relative audit élément bobiné.

2. Elément bobiné selon la revendication 1, **caractérisé en ce que** ladite feuille de matériau thermiquement conducteur au moins dans le plan est constituée par un diffuseur thermique ayant une conductivité thermique dans le plan comprise entre 350 W/mK et 10000 W/mK.

3. Elément bobiné selon la revendication 2, **caractérisé en ce que** ledit diffuseur thermique est à base de graphite.

4. Elément bobiné selon la revendication 2, **caractérisé en ce que** ledit diffuseur thermique est un matériau orthotrope.

5. Elément bobiné selon la revendication 1, **caractérisé en ce qu'**il forme un bobinage d'une machine électrique.

6. Elément bobiné selon la revendication 1, **caractérisé en ce qu'**il forme un bobinage d'une inductance (10).

7. Elément bobiné selon la revendication 1, **caractérisé en ce qu'**il forme un bobinage d'un transformateur (30).

8. Elément bobiné selon la revendication 7, **caractérisé en ce que** ladite feuille de matériau thermiquement conducteur au moins dans le plan est constituée en un matériau électriquement isolant et se substitue à au moins un film isolant formant la capacité inter-bobinage dudit transformateur.

9. Elément bobiné selon la revendication 7 ou la revendication 8, **caractérisé en ce que** ladite extrémité en saillie comporte une pluralité de sondes de température aptes à communiquer des informations de température à une unité commune de contrôle (20) à laquelle elles sont reliées de façon filaire ou non.

## Patentansprüche

1. Gewickeltes Element (10; 30), das von einer Vielzahl von übereinander angeordneten Lagen von Windungen (14A, 14B, 14C), die auf einen Kern (12; 32A, 32B, 32C) gewickelt sind, gebildet ist, **dadurch gekennzeichnet, dass** es eine Folie (16; 40) aus einem wenigstens in der Ebene wärmeleitfähigen Material umfasst, die zwischen zwei der Vielzahl von übereinander angeordneten Lagen von Windungen angeordnet ist und von welcher ein von der Vielzahl von Lagen vorspringendes Ende (16A; 40A) wenigstens eine Temperatursonde (18; 42A, 42B, 42C) zum Bereitstellen einer Temperaturinformation bezüglich des gewickelten Elements umfasst.

2. Gewickeltes Element nach Anspruch 1, **dadurch gekennzeichnet, dass** die Folie aus wenigstens in der Ebene wärmeleitfähigem Material durch einen thermischen Diffusor mit einer Wärmeleitfähigkeit in der Ebene im Bereich zwischen 350 W/mK et 10000 W/mK gebildet ist.

3. Gewickeltes Element nach Anspruch 2, **dadurch gekennzeichnet, dass** der thermische Diffusor auf Basis von Graphit ist.

4. Gewickeltes Element nach Anspruch 2, **dadurch gekennzeichnet, dass** der thermische Diffusor ein orthotropes Material ist.

5. Gewickeltes Element nach Anspruch 1, **dadurch gekennzeichnet, dass** es eine Wicklung einer elektrischen Maschine bildet.

6. Gewickeltes Element nach Anspruch 1, **dadurch gekennzeichnet, dass** es eine Wicklung einer Induktivität (10) bildet.

7. Gewickeltes Element nach Anspruch 1, **dadurch gekennzeichnet, dass** es eine Wicklung eines Transformators (30) bildet.

8. Gewickeltes Element nach Anspruch 7, **dadurch gekennzeichnet, dass** die Folie aus wenigstens in der Ebene wärmeleitfähigem Material aus einem elektrisch isolierenden Material besteht und wenigstens einen Isolierfilm, der die Zwischenwicklungskapazität des Transformators bildet, ersetzt.

9. Gewickeltes Element nach Anspruch 7 oder Anspruch 8, **dadurch gekennzeichnet, dass** das vorspringende Ende eine Vielzahl von Temperatursonden umfasst, die geeignet sind, Temperaturinformationen an eine gemeinsame Kontrolleinheit (20), mit der sie drahtgebunden oder drahtlos verbunden sind, zu übermitteln.

## Claims

1. A wound element (10; 30) made up of a plurality of superposed layers of turns (14A, 14B, 14C) wound on a core (12; 32A, 32B, 32C), the element being **characterized in that** it includes a sheet (16; 40) of a material that is thermally conductive at least in its plane, which sheet is interposed between two of said plurality of superposed layers of turns and has an end (16A; 40A) projecting from said plurality of layers and including at least one temperature probe (18; 42A, 42B, 42C) for delivering temperature information about said wound element.

2. A wound element according to claim 1, **characterized in that** said sheet of material that is thermally conductive at least in its plane is constituted by a thermal diffuser having thermal conductivity in its plane lying in the range 350 W/mK to 10,000 W/mK.

3. A wound element according to claim 2, **characterized in that** said thermal diffuser is based on graphite.

4. A wound element according to claim 2, **characterized in that** said thermal diffuser is an orthotropic material.

5. A wound element according to claim 1, **characterized in that** it forms a winding of an electrical machine.

6. A wound element according to claim 1, **characterized in that** it forms a winding of an inductor (10).

7. A wound element according to claim 1, **characterized in that** it forms a winding of a transformer (30).

8. A wound element according to claim 7, **characterized in that** said sheet of material that is thermally conductive at least in its plane is constituted by a material that is electrically insulating and that takes the place of at least one insulating film forming the inter-winding capacitance of said transformer.

9. A wound element according to claim 7 or claim 8, **characterized in that** said projecting end has a plurality of temperature probes suitable for communicating temperature information to a common monitor unit (20) to which they are connected by wire or wirelessly.
